# EUROPEAN PATENT SPECIFICATION

(11) **EP 4 016 203 B1**
(45) Date of publication and mention of the grant of the patent: **23.09.2026**
(21) Application number: 21214971.0
(22) Date of filing: 16.12.2021
(51) Int. Cl.: G05B 15/02, G05B 19/042

(54) **SYSTEM AND METHOD FOR CONTROLLING BUILDING AUTOMATION SYSTEM**
SYSTEM UND VERFAHREN ZUR STEUERUNG EINES GEBÄUDEAUTOMATISIERUNGSSYSTEMS
SYSTÈME ET PROCÉDÉ DE COMMANDE D'UN SYSTÈME D'AUTOMATISATION DE BÂTIMENT

(30) Priority: 17.12.2020 FI 20206325
(43) Date of publication of application: 22.06.2022
(73) Proprietor: Valaa Technologies Oy, 33200 Tampere (FI)
(72) Inventor: Ilkkala, Ville, 33500 Tampere (FI); Sokka, Henri, 33800 Tampere (FI)
(74) Representative: Aaltonen, Janne Lari Antero

(56) References cited:
- US-A1- 2016 231 724
- US-A1- 2017 124 842
- US-A1- 2020 227 159
- PAN-LUNG TSAI ET AL: "A remote control scheme for ubiquitous personal computing", NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE, vol. 2, 21 March 2004 (2004-03-21), pages 1020 - 1025, XP010705524, ISBN: 978-0-7803-8193-3, DOI: 10.1109/ICNSC.2004.1297087

## Description

### TECHNICAL FIELD

The present disclosure relates to systems for controlling building management, automation and control systems. Moreover, the present disclosure relates to methods for controlling building management, automation and control systems.

### BACKGROUND

Over the past few decades, building automation systems have gained popularity due to continued technological advancements in control and automation development. Generally, a building automation system is installed in a building to control and to monitor mechanical equipment and/or electrical equipment in the building. For example, the building automation system controls and monitors heating, ventilation, air conditioning, lighting, plumbing, power, fire safety, security, and the like in the building. Simple installations of building automation systems may also be called building control systems. Deployments of digital and integrated building automation systems in buildings typically started around 1980s on a large scale. Later these developed into building management systems that have remote control and monitoring functionality implemented over internet.

Legacy building automation systems are often associated with several limitations. Firstly, the existing mechanisms for controlling the legacy building automation systems are inefficient and/or incapable of providing remote control and/or automated control capabilities. Some existing mechanisms have enabled retrofitted short messaging services (SMS) and Internet gateways in order to provide a certain level of remote controllability of the building automation system. However, such mechanisms are difficult to implement and are expensive. Secondly, the existing mechanisms require manual operation of the building automation system via hardware (such as, a local control panel) of the building automation system. Such hardware is difficult to use and thus require presence of a person (namely, a human operator) skilled in the art of using such hardware. Moreover, there currently exists no mechanism that enables the operation of the building automation system by both the human operator and an automated mechanism without causing technical problems (for example, such as operational interference).

US 20200227159 A1 discloses a building management system for medical facilities, wherein a plurality of rooms are equipped with sensors to detect infection risks. The system comprises a controller operatively coupled to the sensors, a memory for storing compliance parameters and an input port for receiving infection alerts. Upon detecting an elevated infection risk, the controller provides control commands to adjust building components in response to predefined compliance parameters. The system aims to enhance automation in healthcare settings by integrating infection risk monitoring within the building management framework.

US 20170124842 A1 discloses a multi-function thermostat with a touch-sensitive display, a communication interface and a processing circuit. The system receives weather updates and emergency alerts from a building management system or external sources. Upon detecting emergency weather conditions or building emergencies, the thermostat displays emergency response directions to users. The integration of real-time environmental monitoring with automated emergency response functionalities enhances building safety and situational awareness.

US 20160231724 A1 describes a remote operation system for machine tools, involving a stationary operating device and a mobile communication device. The system allows seamless transfer of control authorization between the stationary and mobile devices. A first communication link is established between the devices, followed by a configuration change that shifts control authority to the mobile device. The system facilitates remote operation of equipment while ensuring secure access to control mechanisms.

Pan-Lung Tsai et al "A remote control scheme for ubiquitous personal computing", NETWORKING, SENSING AND CONTROL, 2004 IEEE INTERNATIONAL CONFERENCE ON TAIPEI, TAIWAN MARCH 21-23, 2004, PISCATAWAY, NJ, USA, IEEE, vol. 2, 21 March 2004, pages 1020-1025, XP010705524 discusses a remote control scheme for ubiquitous personal computing. The system provides authenticated users with remote access to data stored on their personal devices while minimizing reliance on always-online network servers. The scheme employs home automation techniques to manage access control, offering multiple authentication mechanisms that balance security and accessibility. The approach enhances remote computing capabilities without necessitating high-availability home servers.

Therefore, in light of the foregoing discussion, there exists a need to overcome the aforementioned drawbacks associated with the existing mechanisms for controlling building automation systems.

### SUMMARY

The present disclosure seeks to provide a system for controlling a building automation system. The present disclosure also seeks to provide a method for controlling a building automation system. An aim of the present disclosure is to provide a solution that overcomes at least partially the problems encountered in prior art.

In one aspect, an embodiment of the present disclosure provides a system for controlling a building automation system, the system comprising at least one processor communicably coupled to the building automation system, the at least one processor is configured to:
- identify a view of a first interactive user interface of an operator panel that is currently displayed by the building automation system;
- determine, by processing information presented on the first interactive user interface of the operator panel provided by the building automation system, a status of a building for which the building automation system is used;
- determine at least one control operation that is currently available on the first interactive user interface of the operator panel;
- provide the information presented on the first interactive user interface of the operator panel and the at least one control operation to a second interactive user interface of an external device, wherein the external device is communicably coupled and remote to the at least one processor, wherein the second interactive user interface presents at least the information presented on the first interactive user interface of the operator panel and provides an interface to select the at least one control operation;
- obtain, from the external device, the selection corresponding to the at least one control operation;
- determine at least one command to be executed corresponding to the obtained selection corresponding to the at least one control operation, based at least on the status of the building, wherein the at least one command pertains to control of the building automation system and the at least one command is available in at least the first interactive user interface,
- determine at least one command to be executed further comprising:
   determine the at least one command further based on predefined rules that specify one or more commands that are to be sent to the building automation system corresponding to one or more statuses of the building and when the status of the building does not correspond to any of the predefined rules. the at least one processor determines the at least one command by interpolating and/or extrapolating at least one predefined rule corresponding to at least one similar status of the building;
- send, to the building automation system, the at least one command, wherein the building automation system executes the at least one command.

In another aspect, an embodiment of the present disclosure provides a method for controlling a building automation system, characterised in that the method comprises:
- identifying a view of a first interactive user interface of an operator panel that is currently displayed by the building automation system;
- determining, by processing information presented on the first interactive user interface of the operator panel provided by the building automation system, a status of a building for which the building automation system is used; - determining at least one control operation that is currently available on the first interactive user interface of the operator panel;
- providing the information presented on the first interactive user interface of the operator panel and the at least one control operation to a second interactive user interface of an external device, wherein the external device is communicably coupled and remote to the at least one processor, wherein the second interactive user interface presents at least the information presented on the first interactive user interface of the operator panel and provides an interface to select the at least one control operation;
- obtaining, from the external device, the selection corresponding to the at least one control operation;
- determining at least one command to be executed corresponding to the obtained selection corresponding to the at least one control operation, based at least on the status of the building, wherein the at least one command pertains to control of the building automation system and the at least one command is available in at least the first interactive user interface,
- determine at least one command to be executed further comprising:
   determine the at least one command further based on predefined rules that specify one or more commands that are to be sent to the building automation system corresponding to one or more statuses of the building and when the status of the building does not correspond to any of the predefined rules. the at least one processor determines the at least one command by interpolating and/or extrapolating at least one predefined rule corresponding to at least one similar status of the building;
- sending, to the building automation system, the at least one command for execution by the building automation system.

Embodiments of the present disclosure substantially eliminate or at least partially address the aforementioned problems in the prior art, and enable the system to provide a remote control and/or an automated control for controlling the building automation system.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 illustrates a timing diagram of an architecture of a system for controlling a building automation system, in accordance with an embodiment of the present disclosure;
FIG. 2 illustrates a block diagram of an architecture of a system for controlling a building automation system, in accordance with another embodiment of the present disclosure;
FIGs. 3, 4, and 5 illustrate different coupling arrangements of at least one processor and a building automation system, in accordance with various embodiments of the present disclosure;
FIG. 6A illustrates data flow from a building automation system to at least one processor and an operator panel of the building automation system, while FIG. 6B illustrates data flow from the at least one processor and the operator panel of the building automation system to the building automation system, in accordance with an embodiment of the present disclosure;
FIG. 7 illustrates an environment where a system for controlling a building automation system is used, in accordance with an embodiment of the present disclosure; and
FIG. 8 illustrates steps of a method for controlling a building automation system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system for controlling a building automation system, according to claim 1.

In another aspect of the present disclosure, there is described a method for controlling a building automation system, according to claim 9

The present disclosure provides the aforementioned system and the aforementioned method for controlling a building automation system. In the system, at least one processor is configured to provide at least remote monitoring and/or automated control capabilities for controlling the building automation system. This enables effective control of the building automation system even when a human operator is not present on-site or is not interacting with the building automation system. This is attributed to the fact that the system is well suited to support its integration with Internet to provide an efficient level of remote monitorability, and controllability of the building automation system. This facilitates saving time and costs involved in implementing the system and for controlling the building automation system. Moreover, robotic process automation provided by the system described herein enables in minimizing human error and human risks that are currently associated with human operation of the building automation system. Additionally, the system also enables automated control (when controlled by the at least one processor) as well as manual control (when controlled by the human operator) of the building automation system. The system is cost-efficient, reliable and easy to use.

It will be appreciated that the system described herein enables control of at least one building automation system. The system (and specifically, the at least one processor) may optionally be coupled to a plurality of building automation systems of a plurality of buildings, and may be used for controlling the plurality of building automation systems. As an example, the system may be coupled to two building automation systems of two buildings such as an elementary school building and a high school building in a same school site.

Throughout the present disclosure, the term *"building automation system"* refers to an automated control system, which is typically installed in a building, that enables automatic controlling and/or monitoring of facilities in the building. Examples of the facilities in the building may include, but are not limited to, heating, ventilation, air conditioning, lighting, plumbing, power, fire safety, security. Optionally, the building automation system is a deterministic state machine, which optionally, can have exceptions such as alarms.

Optionally, the building automation system is coupled to at least one of: a heating, ventilation, and air conditioning (HVAC) system of the building, a lighting system of the building, a water system of the building, a power system of the building, a fire system of the building, a security system of the building. Such coupling may be wired and/or wireless. The building automation system enables control of at least one of the aforesaid facilities.

Throughout the present disclosure, the term *"processor"* refers to hardware, software, firmware or a combination of these. The at least one processor of the system controls the building automation system.

Particularly, the at least one processor is configured to execute a software robot for controlling the building automation system. The software robot is constituted by at least one software module. Optionally, the software robot employs a software technology such as Robotic Process Automation (RPA) technology. Therefore, the system for controlling the building automation system may be understood to be an RPA-based system. It will be appreciated that the RPA technology enables the software robot to learn, mimic, and then execute rule-based processes to control the building automation system in a manner similar to that of humans. In an example, the software robot may be executed by a microcontroller (such as Raspberry Pi, Banana Pi, Nano Pi, and the like) that comprises the at least one processor. The at least one processor is communicably coupled to the building automation system either wirelessly or in a wired manner. Optionally, the at least one processor is communicably coupled to the building automation system via at least one network. Examples of the at least one network include, but are not limited to, a Local Area Network (LAN), a Wide Area Network (WAN), a Metropolitan Area Network (MAN), the Internet, a radio network, telecommunication networks, and a Worldwide Interoperability for Microwave Access (WiMAX) network.

It will be appreciated that the term *"at least one processor"* refers to *"one processor"* in some implementations, and *"a plurality of processors"* in other implementations. Moreover, the at least one processor may be implemented on-site (i.e., on a site of the building and the building automation system) or remotely (i.e., away from the site of the building and the building automation system). In both the on-site and the remote implementations, the system enables automated control of the building automation system. The remote implementation of the at least one processor additionally enables remote monitoring and optionally, control of the building automation system.

Optionally, the at least one processor is configured to execute at least one software module for executing the software robot. This at least one software module constitutes the software robot that controls the building automation system. As an example, a software module that is executed for obtaining the information presented on a first interactive user interface may be understood to be a *'capturing software module', a* software module that is executed for processing the information presented on the first interactive user interface may be understood to be *a 'interpreter software module',* a software module that is executed for providing the second interactive user interface may be a *'rendering software module',* a software module that is executed for determining the at least one command to be executed may be understood to be a *'mimicking software module',* while a software module that is executed for sending the at least one command to the building automation system may be understood to be a *'communicating software module'.* In an embodiment of the present disclosure, at least one command can be provided to the building automation system in the form of a series of commands such as E,5, D,4, D,3, D,5, E, E. Herein, E, D and U refers to enter, up and down respectively.

In one of the embodiments of the present disclosure, the at least one processor identifies a view of a first interactive user interface of an operator panel that is currently displayed by the building automation system. In another embodiment, the at least one processor is communicably coupled to the building automation system.

Optionally, a given view of the first interactive user interface displays data. This data may, for example, be values of analog sensor measurements or analog sensor data. Optionally, the given view of the first interactive user interface allows the human operator or the at least one processor to modify state of the building automation system by entering values (such as, a new setpoint, a password, and the like).

Optionally, the given view of the first interactive user interface allows the human operator or the at least one processor to carry out operations either related to the building automation system (such as, a reset operation, a reboot operation, and the like) or related to navigation to another view (such as, navigation to another view which is different from the view that is currently displayed, navigation to the default view, and the like). Optionally, a given view of the first interactive user interface display alarms and other notifications unprompted by the human operator. The at least one processor performs at least one of the aforesaid recording, reacting and/or navigating operations with respect to the views of the first interactive user interface, by sending commands that mimic interaction of the human operator with the interactive user interface.

Optionally, a given view of the first interactive user interface displays the at least one control operation pertaining to controlling at least one of: to the HVAC system of the building, the lighting system of the building, the water system of the building, the power system of the building, the fire system of the building, the security system of the building.

The information presented on the first interactive user interface of the operator panel is indicative of the status of the building. The status of building for which the building automation system is used, is determined by processing information presented on the first interactive user interface of the operator panel provided by the building automation system.

Throughout the present disclosure, the term "status" refers to a condition of the building with regard to the facilities in the building. Optionally, the status of the building pertains to at least one of: heating within the building, ventilation within the building, air-conditioning within the building, lighting within the building, water supply within the building, power within the building, fire within the building, security within the building.

The at least one processor further determines at least one control operation that is currently available on the first interactive user interface of the operator panel. Optionally, the at least one control operation pertains to at least one of, but not limited to: shutting down of the facilities in the building, starting up the facilities in the building, adjusting permissible limit(s) of the parameter(s)measured as the sensor data, modifying the setpoint(s) for the parameter(s) in the sensor data, implementing a maintenance schedule for the facilities in the building, acknowledging alarms for the building.

Optionally, the at least one processor is configured to obtain the information presented on the first interactive user interface. The at least one processor obtains (namely, read) said information when said information is communicated by the building automation system for presentation at the first interactive user interface of the operator panel.

Optionally, the information to be presented on the first interactive user interface of the operator panel is obtained by the building automation system using at least one sensor that is installed within the building. The at least one sensor, in operation, generates sensor data which is indicative of the status of the building. The at least one sensor is communicably coupled to the building automation system and sends the sensor data to the building automation system. Optionally, the building automation system presents the sensor data on the first interactive user interface of the operator panel. Examples of the at least one sensor may include, but are not limited to, a temperature sensor, a motion sensor, a pressure sensor, a smoke sensor, a contact sensor, a humidity sensor, a level sensor, an optical sensor, an air quality sensor. Optionally, the sensor data comprises a set of values of parameters that are measured and/or detected by the at least one sensor. In an example, the sensor data pertaining to the temperature sensor may comprise a set values of temperatures that have been measured on an hourly basis by the temperature sensor. It will be appreciated that when the system is used for controlling the plurality of building automation systems, the at least one processor is configured to obtain and process information presented on a plurality of first interactive user interfaces provided by the plurality of building automation systems, to determine statuses of the plurality of buildings for which the plurality of building automation systems are used.

Optionally, the at least one processor is configured to obtain at least one of: status(es) of particular floor(s) of the building, the sensor data pertaining to all sensors, the sensor data pertaining to a specific sensor, at least one acknowledged alarm and/or unacknowledged alarm for the building. In this regard, the at least one processor may additionally be communicably coupled to the at least one sensor. The at least one processor processes at least one of the aforesaid information to determine the status of the building.

Optionally, when processing the information presented on the first interactive user interface of the operator panel, the at least one processor is configured to employ at least one data processing technique. Examples of the at least one data processing technique include, but are not limited to, optical character recognition (OCR), parsing, image to text conversion, and symbol processing. As an example, the information presented on the first interactive user interface may be a set of rules for centrally controlling water temperature of the building based on a temperature in an environment of the building, and a current temperature in the environment of the building. The set of rules may, for example, be that when the temperature in the environment of the building is approximately -20 degrees Celsius, 0 degrees Celsius, and 20 degrees Celsius, the water temperature of the building should be approximately 32 degrees Celsius, 25 degrees Celsius, and 18 degrees Celsius, respectively. This information may be in form of pixel-based data that is processed, by parsing, to determine that the status of the building is that the temperature in the environment of the building is such that the water temperature has to be centrally heated by 7 degrees.

Optionally, when obtaining and processing the sensor data, the at least one processor is configured to:
- navigate to view(s) of the first interactive user interface wherein the sensor data is presented, wherein the first interactive user interface is displayed (namely, provided) by the building automation system;
- obtain and parse the sensor data;
- send the parsed sensor data to cloud; and
- navigate to a default view that is to be displayed by default for a next scheduled task or a new task.

In an example, for obtaining and processing the sensor data pertaining to all the sensors, the at least one processor may:
- navigate to a main menu view of the first interactive user interface;
- navigate to a measurement readout menu view of the first interactive user interface;
- obtain the sensor data pertaining to all the sensors, from all pages of the measurement readout menu;
- parse the sensor data;
- send the collected and the parsed sensor data to the cloud; and
- navigate to return to the main menu view for the next scheduled task.

Typically, the building automation systems are automation-based systems that are centered around a concept of a point (such as, an input/output (I/O) point, a variable, a parameter, a command, a setpoint, and the like). Such concept is utilized in logic programming of the software robot executed by the at least one processor. Often, current values of the points are not accessible individually, in a view of the first interactive user interface of the building automation system, but are accessible as listings divided into different categories, pages, and the like.

Therefore, while obtaining the information presented on the first interactive user interface, a task for obtaining an individual point would comprise reading all points falling within that category.

Optionally, the at least one processor is configured to execute the software robot to perform all possible tasks that a human operator can perform on the building automation system. It will be appreciated that a plurality of smaller tasks could be combined to form larger task(s) for executing relatively large and complex procedures for controlling the building automation system.

In an embodiment, the at least one processor is coupled to a terminal port of the building automation system. Optionally, in this regard, the at least one processor is directly coupled (in the wired manner) to the building automation system. The term *"terminal port"* refers to an interfacing port for enabling communication between the at least one processor used by a human operator and the building automation system. Optionally, the information to be presented on the first interactive user interface is to be displayed via a display device that is coupled to the terminal port of the building automation system. It will be appreciated that this information indicative of (namely, pertaining to) the status of the building is sent by the building automation system, via the terminal port, to the at least one processor. The at least one processor captures this information at the terminal port to obtain the status of the building. Examples of the display device may include, but are not limited to, a desktop computer, a laptop, a tablet, a phablet, a smartphone.

In another embodiment, the at least one processor is arranged on a communication channel between the building automation system and an operator panel of the building automation system. The term *"communication channel"* refers to a data transmission medium that is used for data communication between the building automation system and a device associated with the building automation system either wirelessly, and/or in a wired manner. Herein, the communication channel is optionally used for data communication between the building automation system and the operator panel. Optionally, the at least one processor is arranged in such a manner that it is coupled to the building automation system as well as the operator panel, via the communication channel. In such a case, when data is communicated between the building automation system and the operator panel, the data is also captured by the at least one processor. Optionally, the data communicated between the building automation system and the operator panel is the information to be presented on the first interactive user interface. When such data is captured by the at least one processor, from the communication channel, the information indicative of the status of the building is obtained by the at least one processor.

The term *"operator panel"* refers to a control panel that facilitates a human operator to interact with the building automation system for purposes of manually monitoring and controlling the building automation system. Optionally, the operator panel comprises at least one input device and at least one output device for enabling the aforesaid interaction. Examples of the at least one input device may include, but are not limited to, a keyboard, a keypad, a mouse, a microphone, a light pen, a touchscreen. Optionally, the first interactive user interface is provided on the at least one output device. Optionally, the at least one output device is a character-based display device, a pixel-based display device, and the like. Examples of the at least one output device may include, but are not limited to, a monitor screen, a projection screen, a seven-segment display screen. Optionally, the character-based display device is configured to display text-based data, for example, a text file, a document, and the like. Optionally, the pixel-based display device is configured to display pixel-based data, for example, an image, a video, and the like. Optionally, the operator panel can be a generic" dummy" panel with 7-digit display and buttons, a "Video channel" (more advanced) wherein a flat cable connection can be used, a terminal port e.g. RS-232, or USB, either taken individually or the combination of at least two or more of said components.

Optionally, the information presented on the first interactive user interface is the text-based data or the pixel-based data. It will be appreciated that when the information presented on the first interactive user interface is the text-based data, said information is interpreted using at least one parser. It will also be appreciated that when the information presented on the first interactive user interface is the pixel-based data, the said pixel-based data is converted into the text-based data, and then interpreted using the at least one parser. The at least one parser is part of the interpreter software module and is implemented on a communication channel between the building automation system and a device that provides the first interactive user interface. Optionally, the at least one parser is tailored according to the deterministic state machine of the building automation system. In such a case, the at least one parser assigns read parameters into variables of a replica state machine in its upstream channel and the at least one processor presents these variables, as required, on the second interactive user interface. Optionally, the at least one processor is configured to execute the at least one parser. Optionally, the at least one parser is configured to extract meaningful information present in the text-based data. For example, the at least one parser is configured to obtain the sensor data of the at least one sensor. Optionally, an optical character recognition (OCR) is applied to the information presented on the first interactive user interface (in form of the text-based data or the pixel-based data) prior to parsing the data. The OCR converts said information into an editable and a searchable form of information. This beneficially allows for accurate parsing.

In yet another embodiment, the at least one processor is implemented as at least one first processor and at least one second processor, wherein the at least one first processor is arranged on a first communication channel between the building automation system and an output device of the building automation system, and the at least one second processor is arranged on a second communication channel between the building automation system and an input device of the building automation system. In this way, the at least one first processor is arranged to be coupled to the building automation system as well as the output device, via the first communication channel. In such a case, when the information presented on the first interactive user interface is transmitted from the building automation system to the output device, said information is captured by the at least one first processor from the first communication channel. Optionally, the at least one first processor is configured to execute at least one capturing software module to obtain the information presented on the first interactive user interface. Furthermore, the at least one second processor is arranged to be coupled to the building automation system as well as the input device, via the second communication channel. Optionally, the at least one second processor is configured to execute at least one mimicking software module to determine the at least one command to be executed, wherein the at least one command mimics an input that would have been otherwise provided by a human operator using the input device.

Optionally, the operator panel of the building automation system in which the first interactive user interface of an operator panel is provided can be a display device coupled to the terminal port or an output device and/or input device.

Optionally, the building automation system comprises an encoder for encoding data sent by the building automation system and a decoder for decoding the data received by the building automation system. Optionally, the building automation system employs an encoding technique (such as, an American Standard Code for Information Interchange (ASCII) encoding, or any other text encoding technique) for encoding the data. When the data is encoded using the ASCII encoding, the data may be terminated with a specific character or timeout. Optionally, the building automation system comprise a maintenance port (for example, a recommended standard 232 (RS-232) port) for facilitating input and output of the data. Optionally, the encoder and the decoder are integrated into the operator panel. Optionally, the encoder and decoder are built-in to the building automation system.

In an embodiment of the present disclosure, the at least one processor provides the information presented on the first interactive user interface of the operator panel and the at least one control operation to the second interactive user interface on the external device, wherein the external device is communicably coupled and remote to the at least one processor, wherein the second interactive user interface presents at least the information presented on the first interactive user interface of the operator panel and provides an interface to select the at least one control operation. In one of the embodiments of present disclosure, the processor obtains the selection corresponding to the at least one control operation from the external device. The external device that is remote to the processor, is associated with the human operator, and enables the human operator to remotely monitor and optionally, control the building automation system using the commands provided by the first interactive user interface of the operator panel. As an example, when an alarm is raised in the building, the second interactive user interface may enable the human operator to monitor a location from which the alarm was raised. In an embodiment, the second interactive user interface is different from the first interactive user interface. In such a case, the second interactive user interface may be modernized to be much simpler than the first interactive user interface. The second interactive user interface may be simplified to enable even untrained or less-skilled human operators to easily and correctly control the building automation system. In another embodiment, the second interactive user interface is same as the first interactive user interface. It will be appreciated that the second interactive user interface may provide some or all of human operator control functionality provided by the first interactive user interface.

In an embodiment of the present disclosure, the processor determines at least one command to be executed corresponding to the obtained selection corresponding to the at least one control operation, based at least on the status of the building, wherein the at least one command pertains to control of the building automation system and the at least one command is available in at least the first interactive user interface. The at least one command for execution by the building automation system is thereby sent to the building automation system. The processor via the first interactive user interface and the remotely located second interactive user interface, is configured to provide at least remote monitoring and/or automated control capabilities for controlling the building automation system. This enables effective control of the building automation system even when a human operator is not present on-site or is not interacting with the building automation system. Furthermore, processing the information presented on the first interactive user interface to determine the status of the building, communication between otherwise closed and disconnected building automation systems and controllers is enabled. Additionally, robotic process automation provided by the system described herein enables in minimizing human error and human risks that are currently associated with human operation of the building automation system

According to the invention, the at least one command is determined based on predefined rules that specify one or more commands that are to be sent to the building automation system corresponding to one or more statuses of the building. Moreover, optionally, the at least one command is determined based on its availability in the first interactive user interface. The at least one command that is determined to be executed is available in the first interactive user interface, on at least one view of the first interactive user interface. Optionally, the at least one command pertains to at least one of: shutting down of the facilities in the building, starting up the facilities in the building, adjusting permissible limit(s) of the parameter(s) measured as the sensor data, modifying the setpoint(s) for the parameter(s) in the sensor data, implementing a maintenance schedule for the facilities in the building, acknowledging alarms for the building. Optionally, the predefined rules are in form of operational guides. Optionally, the building automation system presents, on the first interactive user interface, the predefined rules.

According to the invention, when the status of the building does not correspond to any of the predefined rules, the at least one processor determines the at least one command by interpolating and/or extrapolating at least one predefined rule corresponding to at least one similar status of the building. Optionally, the at least one processor determines the at least one command by at least one of: prompting the human operator to provide the at least one command, employing at least one artificial intelligence algorithm to determine the at least one command.

In an example, when air conditioning system of the building is continuously running for 6 hours, the at least one processor may determine requisite command(s) to be executed to shut down the air conditioning system of the building for 1 hour. In another example, when ventilation system of the building is switched off for past 8 hours, the at least one processor may determine requisite command(s) to be executed to start up the ventilation system of the building. In yet another example, the at least one processor may determine requisite command(s) to be executed for a scheduled maintenance of water system and sewage system of the building. In still another example, the at least one processor may determine requisite command(s) to be executed in order to acknowledge an alarm in a case of a fire hazard in the building. In such a case, acknowledging the alarm would automatically activate a water sprinkler system of the building.

Optionally, the at least one command is determined based on default rules that are unrelated to the status of the building. Moreover, optionally, the at least one command is additionally determined based on criteria other than the status of the building. Such determination of the at least one command is described later in more detail.

Optionally, when the information presented on the first interactive user interface is the sensor data, the at least one processor is configured to determine and send the at least one command to the building automation system, in order to modify the setpoint for the parameters in the sensor data. For example, when the status of the building is indicated by values of pressure of the ventilation system and temperature of the heating system in the building, the at least one processor may send requisite command(s) to the building automation system to reset said values of the pressure and the temperature accordingly. Optionally, the at least one processor is further configured to determine whether or not the at least one command to modify the setpoint for the parameters in the sensor data has been executed by the building automation system.

Optionally, in this regard, the at least one processor is configured to:
- navigate to a view, of the first interactive user interface, where the setpoint for the parameters has to be modified;
- select a parameter, in the view, by entering a point identifier (ID) associated with the parameter;
- modify value of the parameter in a next view of the first interactive user interface;
- confirm the modified values of the parameter;
- navigate to a view, of the first interactive user interface, to obtain current values of the parameters in the sensor data;
- parse the data presented in the view;
- compare the modified value of the parameter with the current value of the parameter, to determine whether or not the value of the parameter has been modified;
- send the modified value to the cloud, when it is determined that the value of the parameter has been modified; and
- navigate to a default view that is to be displayed by default for a next scheduled task or a new task.

Optionally, when the at least one processor is coupled to the terminal port of the building automation system, the at least one processor is configured to send the at least one command as text to the building automation system, via a serial port.

Optionally, when the at least one processor is arranged on the communication channel between the building automation system and the operator panel, the at least one processor is configured to execute the communicating software module to send the at least one command to the building automation system. It may be understood that the communicating software module mimics data protocol that is used by the operator panel, to send the at least one command to the building automation system. Such a communicating software module mimics a manner in which the human operator communicatively controls the building automation system. Optionally, at a configuration stage of the communicating software module, a testing sequence could take place in which a developer presses each key of the input device in order to determine an associated function for each key and a control signal corresponding to said function. These control signal would later be used by the at least one processor to send the at least one command to the building automation system.

Optionally, when the at least one second processor is arranged on the second communication channel between the building automation system and the input device, the at least one second processor is configured to send the at least one command, according to protocol of connection provided by the second communication channel, to the building automation system.

Typically, building automation systems follow a relatively similar programming paradigm (for example, in terms of inputs, outputs, virtual variables, global variables, the setpoints, scheduled programs, logic blocks, and the like). However, menu flows, available features, screen layouts, input methods, and like could vary dramatically for different variants of the building automation system. Moreover, by means of a generic API, versions of the same building automation system can also be localized for different languages, including naming of point classes and categories of sensors and their sensor data. The system described herein beneficially provides this generic API. In the system described herein, for each point of a given building automation system, an associated task is mapped to a corresponding class in a unified data model. Thus, the system obtains such points of different building automation systems that behave similarly, while an actual way of retrieving and/or modifying those points vary according to different building automation systems. For example, the system may control two building automation systems A and B using the generic API. Herein, there may be two versions of the building automation system A for two different languages C and D. The first version is building automation system A with language C, and another is building automation system A with language D. An actual categorization and/or a classification of input and output points, the setpoints and global variables may vary between different building automation systems.

Optionally, the at least one processor is further configured to:
- obtain, from the external device, an input corresponding to the at least one command, the at least one command being available in the second interactive user interface; and
- process the input to determine the at least one command to be executed.

Optionally, in this regard, the second interactive user interface presents the at least one command on at least one view of the second interactive user interface. Therefore, the at least one command is available in the second interactive user interface. The input corresponding to the at least one command is provided, by the human operator using the external device, for remotely controlling the building automation system. The input may be in form of a touch input, a voice input, an image input, a text input, or similar. The input may be provided based on the human operator's assessment of the information presented on the second interactive user interface. This information is same as the information presented on the first interactive user interface, and is indicative of the status of the building. As the at least one processor provides the second interactive user interface including the at least one command, the at least one processor accurately processes the input to determine the at least one command to be executed. In an example, the human operator may touch and press using his/her finger, a portion of a touch-sensitive screen of the external device that corresponds to a command for increasing central air conditioning temperature setting. The at least one processor obtains co-ordinates of the touch input and processes the co-ordinates to determine that the at least one command to be executed is the command for increasing central air conditioning temperature setting.

Optionally, the predefined rules associating the at least one command to be executed with the one or more status of the building are preprogrammed into the second interactive user interface. Optionally, the predefined rules are provided on at least one view of the second interactive user interface.

It will be appreciated that at any given time, the at least one processor determines the at least one command to be executed entirely by itself (for example, based at least on the status of the building), or by processing the input obtained from the external device. The external device is physically remote from the building automation system, and is optionally utilized in co-ordination with the at least one processor to remotely control the building automation system.

Optionally, the external device is used for controlling the plurality of building automation systems of the plurality of buildings. In exemplary forms of the invention, the at least one processor is further configured to execute a translation software module that translates a given command to be executed by a given building automation system into a format that is compatible with and understandable by the given building automation system. Upon such translation, the given command is sent to the given building automation system for execution. The format of the given command upon translation emulates a corresponding input that would have been otherwise provided by the human operator (via the operator panel or the input device) to the given building automation system for sending the given command to the given building automation system. Optionally, the translation software module is implemented on a communication channel between the at least one processor and the given building automation system.

Optionally, when the external device is used for controlling the plurality of building automation systems of the plurality of buildings, the at least one processor provides the second interactive user interface by creating macros and/or rules for combining information presented on the plurality of first interactive user interfaces of the plurality of building automation systems and presents said information on the second interactive user interface. Optionally, different buildings having different automation systems on a same site are controllable as a single unit, via the second interactive user interface, when the different buildings have some similar operational rules and/or conditions.

Optionally, the at least one processor is communicably coupled to at least one server, and wherein the at least one processor is further configured to:
- obtain, from the at least one server, information pertaining to at least one of: a building for which the building automation system is used, environmental conditions associated with the building, rules and/or regulations pertaining to a geographical region where the building is located; and
- determine the at least one command to be sent to the building automation system, based on the obtained information.

It will be appreciated that the term *"at least one server"* refers to *"one server"* in some implementations, and *"a plurality of servers"* in other implementations. In an example, the plurality of servers could have a distributed architecture. In another example, the at least one server could be implemented by way of at least one cloud server. Optionally, the at least one processor is communicably coupled to the at least one server wirelessly and/or in a wired manner.

Optionally, the information pertaining to the building comprises information regarding the facilities in the building. In an example, the building for which the building automation system is used may have different lighting systems for different floors, and there may be a need to switch off lights of a specific floor of the building. In such a case, the information pertaining to the building may comprise information of lights of the specific floor, and the at least one processor may send at least one command pertaining to switching off the lights of that specific floor, to the building automation system.

Optionally, the information pertaining to the environmental conditions associated with the building comprises information regarding at least one of: temperature, pressure, humidity, precipitation, wind speed, weather warnings, for the environment where the building is located. In such a case, the at least one processor is configured to determine the at least one command to be sent to the building automation system, according to said environmental conditions. Optionally, the information pertaining to the environmental conditions are updated by the at least one server either continuously or intermittently. This beneficially provides an up-to-date information to the at least one processor, thereby enabling the at least one processor to determine the at least one command suitably according to the environmental conditions. In an example, the building automation system may be used to control heating system inside the building. Herein, the at least one processor may obtain weather prognosis from the at least one server. The weather prognosis may indicate that weather near the building would be significantly warm during day. In such a case, the at least one processor may send at least one command pertaining to turning off the heating system during the day. In another case, the weather prognosis may indicate that the weather near the building would be chilly during night, and the at least one processor may send at least one command pertaining to turning on the heating system in evening, so that the building may be adequately heated by night when the weather would be chilly.

Optionally, the information pertaining to the rules and/or the regulations pertaining to the geographical region comprises local requirements for at least one of: energy conservation, water conservation, exceptional circumstances, that are to be implemented for all buildings in the geographical area. Such rules and/or regulations are often laid out for ecologically-sensitive geographical regions and all buildings in such regions are required to comply with these rules and/or regulations. In such a case, the at least one processor is configured to determine the at least one command according to said requirements.

In an example, there may be local legislative requirement for using solar power in the building. In such a case, the at least one processor is configured to send requisite commands to the building automation system in order to control a power system of the building accordingly. In another example, exceptional circumstances of occurrence of a pandemic may involve immediate closure of all factories for a given number of days. In such a case, the the at least one processor is configured to send requisite commands to the building automation system in order to control (for example, by turning off, putting on standby mode, and the like) facilities of the factory accordingly.

The technical benefit of determining the at least one command based on the information obtained from the at least one server is that it enables the at least one processor to accurately and reliably determine relevant and useful command(s) for controlling the building automation system. Certain information pertaining to the building, the environmental conditions, and the rules and/or regulations may considerably affect a manner in which the building automation system is to be controlled. Therefore, it is beneficial to take such information into account when determining the at least one command, for controlling the building automation system in a safe, reliable, environment-friendly, and compliant manner. In some case, if required, such information may not be used concurrently, but may be used in future (for example, the weather prognosis) for controlling the building automation system.

Optionally, the at least one processor is further configured to:
- determine whether or not a human operator controls or is to control the building automation system; and
- temporarily release control of the building automation system, when it is determined that the human operator controls or is to control the building automation system.

When the human operator controls or is to control the building automation system, there would be interaction between the human operator and the building automation system. In such a case, the at least one processor temporarily releases control of the building automation system to enable the human operator to control the building automation system. In other words, the control of the building automation system is released by the at least one processor for a specific (and limited) period of time only. Once this specific period of time elapses, the at least one processor reclaims control of the building automation system. When no human operator controls or is to control the building automation system, there would not be any interaction between the human operator and the building automation system. In such a case, the at least one processor controls the building automation system by default. It will be appreciated that the building automation system would be controlled in a well-synchronized manner by both an automated control (when controlled by the at least one processor) as well as a manual control (when controlled by the human operator). This can be attributed to the fact that there would not be any conflict between the at least one processor and the human operator when controlling the building automation system as at any point of time, only one of the at least one processor or the human operator would control the building automation system.

Optionally, it is determined that:
- the human operator controls the building automation system when a given command is sent from the operator panel or the input device to the building automation system within a predefined time period;
- the human operator is to control the building automation system when the at least one processor receives a control request from the external device that is communicably coupled to the at least one processor.

Optionally, when determining whether or not the human operator controls the building automation system, the at least one processor is configured to monitor activity on the operator panel or the input device of the building automation system. Said monitoring is done to determine whether or not the given command is sent from the operator panel or the input device to the building automation system within the predefined time period. When there is no activity on the operator panel or the input device within the predefined time period (for example, 10 minutes, 150 seconds, and the like), the at least one processor determines that no human operator controls the building automation system. In that case, the at least one processor continues to control or takes over control of the building automation system and resumes its scheduled task(s).

Optionally, when the at least one processor is controlling the building automation system, the first interactive user interface prompts the human operator to press a key to take over control of the building automation system. The building automation system provides this prompt via the first interactive user interface. After the human operator presses the key, the at least one processor temporarily releases control of the building automation system. Optionally, in this regard, when the human operator presses the key, a notification is displayed via the first interactive user interface. Said notification indicates that the at least one processor is releasing or is due to release control of the building automation system. Optionally, the at least one processor is configured to immediately temporarily release control if the at least one processor is not performing any task at a time when the human operator controls or is to control the building automation system. Alternatively, optionally, the at least one processor is configured to temporarily release control upon completion of a current task being executed by the at least one processor at a time when the human operator controls or is to control the building automation system.

Optionally, when temporarily releasing control, the at least one processor is configured to reset the first interactive user interface to a default view for the human operator. The first interactive user interface is provided on the operator panel or the output device of the building automation system.

Optionally, the at least one processor is further configured to provide an indication pertaining to a current control status of the building automation system, via the first interactive user interface and/or the second interactive user interface. Optionally, the indication is a notification regarding who is currently controlling the building automation system. Optionally, the notification is at least one of: a push notification, a flashing notification, a graphical notification, a text notification, an audio notification, and the like. Such a notification informs the human operator whether or not the at least one processor is controlling the building automation system.

Optionally, the control request is an Application Programming Interface (API) call from the external device. Optionally, the external device is a portable device (such as, a smart phone, a tablet, a laptop, and the like) or a non-portable device (such as, a desktop-computer, a workstation, and the like). In an example, it may be determined that the human operator is to control the building automation system when the at least one processor receives the API call triggered by an application in the smart phone associated with the human operator. The application is executed to provide the second interactive user interface. It will be appreciated that the external device is remote from the building automation system. By using the external device, the human operator remotely controls the building automation system. Therefore, the system described herein is well-adapted to seamlessly coordinate with on-site control (as in the case of sending the given command from the operator panel or the input device), as well as with remote control of the building automation system by the human operator. Optionally, the control request is sent from the external device to the at least one processor on occurrence of at least one of: the input being provided by the human operator, execution of an artificial intelligence (AI) algorithm that makes control requests, execution of a schedule that is to be maintained for making control requests.

Optionally, the at least one processor is configured to monitor activity on a communication channel between the at least one processor and the external device to determine whether or not the control request is received from the external device. When no control request is received from the external device within the predefined time period (for example, 10 minutes, 150 seconds, and the like), the at least one processor determines that no human operator is to control the building automation system.

Optionally, the at least one processor is communicably coupled to a maintenance system, the maintenance system being remote from the building automation system, wherein the at least one processor is further configured to:
- receive, from the maintenance system, maintenance information pertaining to at least one maintenance task that is to be performed for the building; and
- determine the at least one command to be sent to the building automation system, based on the maintenance information.

The term *"maintenance system"* enables automation of the at least one maintenance task that is to be performed for the building. Such maintenance tasks are performed to ensure wellbeing and safety of users and occupants of the building, as the facilities of the building undergo wear and tear with use and require proper maintenance for safe and reliable operation. Optionally, the at least one maintenance task is scheduled periodically. More optionally, the at least one maintenance task is scheduled on at least one of: a weekly basis, a monthly basis, a semi-annual basis, an annual basis, a quinquennially basis. The technical benefit of determining the at least one command based on the maintenance information received from the maintenance system is that the at least one processor determines and sends the at least one command for execution of the at least one maintenance task in a timely and systematic manner. This prevents decay, damage and degradation of equipment (such as, HVAC system, power system, and the like) in the building, maintains structural stability of the building and safety of the users and the occupants of the building. In this way, the at least one processor efficiently controls the building automation system, by utilizing the maintenance information received from the maintenance system, to ensure that the at least one maintenance task is performed for the building as required. Maintenance of the building in such a manner is free from human errors and/or lapses in enabling the performance of the at least one maintenance task.

As an example, the maintenance information pertaining to the at least one maintenance task indicates that a scheduled maintenance of air conditioning system within the building is to be performed at a specified date and time, wherein the air conditioning system is to be shut down for 12 hours at the specified date and time for the scheduled maintenance. In such a case, the at least one processor is configured to send, at the scheduled date and time, a first command to the building automation system for shutting down the air conditioning system for 12 hours, and a second command for running a ventilation system for those 12 hours in order to ensure proper air circulation within the building.

Optionally, the at least one processor is further configured to perform at least one of:
- identify and record data presented in the view that is currently displayed;
- react to unprompted data presented in the view that is currently displayed;
- navigate to another view which is different from the view that is currently displayed;
- navigate to a default view that is to be displayed by default.

Generally, the views of the first interactive user interface that is displayed by the building automation system are divided into a plurality of text-based views (namely, screens). Some text-based views depend on menu structures, wherein the human operator knows, through textual instructions that are displayed on the first interactive user interface, what key(s) to press. Alternatively, other text-based views depend to specific menu controls (such as, buttons, wheels, and the like) that switch the views while relying on knowledge, manuals and annotations on the views itself. Optionally, the first interactive user interface of the building automation system is deterministic. The at least one processor performs at least one of the aforesaid identification and/or determination operations with respect to the views of the first interactive user interface, by capturing data pertaining to the first interactive user interface when such data is communicated between the building automation system and one of: the terminal port, the operator panel, the output device.

Optionally, the building automation system is controllable according to one of a plurality of control modes, wherein each control mode amongst the plurality of control modes corresponds to a given level of control. Optionally, in this regard, the building automation system is controllable by the system according to different levels of control, wherein at a lowest level of control, the system has minimum privileges to control the building automation system. In an example, at the lowest level of control, the system may only have a read (namely, a view) privilege with regard to the building automation system. In other words, the system may only be authorized to view data and/or information presented by the building automation system but may not be authorized to cause any change to the data and/or information using the at least one command. Optionally, at a highest level of control, the system has maximum privileges to control the building automation system. In an example, at the highest level of control, the system may have a read privilege, a write privilege, a modify privilege, a reset privilege, and the like, using the at least one command. Optionally, at an intermediate level of control, the system has intermediate privileges to control the building automation system. In an example, at the intermediate level of control, the system may have a read privilege and a modify privilege, but not a reset privilege. Optionally, the plurality of control modes are pre-defined for the building automation system.

For illustration purposes only, there will now be described an example implementation of the system for controlling the building automation system. In such an implementation, the building may be a school building hosting 1000 pupils. The building automation system is, for example, employed to control the heating, ventilation, and air conditioning (HVAC) system of the building, the lighting system of the building, the water system of the building, the fire system of the building, and the like. The system is used for controlling the building automation system, wherein the at least one processor is arranged on the communication channel between the building automation system and the operator panel of the building automation system. The information presented on the first interactive user interface may be obtained by the at least one processor, from the communication channel, when the building automation system sends text-based data for displaying at the operator panel, via the communication channel. This information may be processed to determine a status of the building that an air quality index inside the building is 170, which is unhealthy for the pupils. This information would also be presented on the second interactive user interface provided (namely, rendered) on the external device. Based on such a status of the building, the at least one processor may determine a command for turning on an air purification system of the building. This command, when executed by the building automation system, would improve the air quality index inside the building. In such a case, the at least one processor is configured to send this command to the building automation system in order to turn on the air purification system of the HVAC system.

The present disclosure also relates to the method as described above. Various embodiments and variants disclosed above, with respect to the aforementioned first aspect, apply mutatis mutandis to the method.

Optionally, in the method, determining the at least one command to be executed comprises:
- obtaining, from the external device, an input corresponding to the at least one command, the at least one command being available in the second interactive user interface; and
- processing the input to determine the at least one command.

Optionally, the method further comprises:
- determining whether or not a human operator controls or is to control the building automation system; and
- temporarily releasing control of the building automation system, when it is determined that the human operator controls or is to control the building automation system.

Optionally, the method further comprises:
- obtaining, from at least one server, information pertaining to at least one of: a building for which the building automation system is used, environmental conditions associated with the building, rules and/or regulations pertaining to a geographical region where the building is located; and
- determining the at least one command to be sent to the building automation system, based on the obtained information.

Optionally, the method further comprises:
- receiving, from a maintenance system, maintenance information pertaining to at least one maintenance task that is to be performed for the building, the maintenance system being remote from the building automation system; and
- determining the at least one command to be sent to the building automation system, based on the maintenance information.

Optionally, the method further comprises at least one of:
- identifying and recording data presented in the view that is currently displayed;
- reacting to unprompted data presented in the view that is currently displayed;
- navigating to another view which is different from the view that is currently displayed;
- navigating to a default view that is to be displayed by default.

Optionally, the method further comprises enabling the human operator to remotely monitor and optionally control the building automation system via the second interactive user interface. It will be appreciated that the human operator remotely monitors and optionally controls the building automation system using the external device, which is remote from the building automation system. It will also be appreciated that the method is well-adapted to seamlessly coordinate with on-site control (as in the case of sending the given command from the operator panel or the input device), as well as with remote control of the building automation system by the human operator.

### DETAILED DESCRIPTION OF THE DRAWINGS

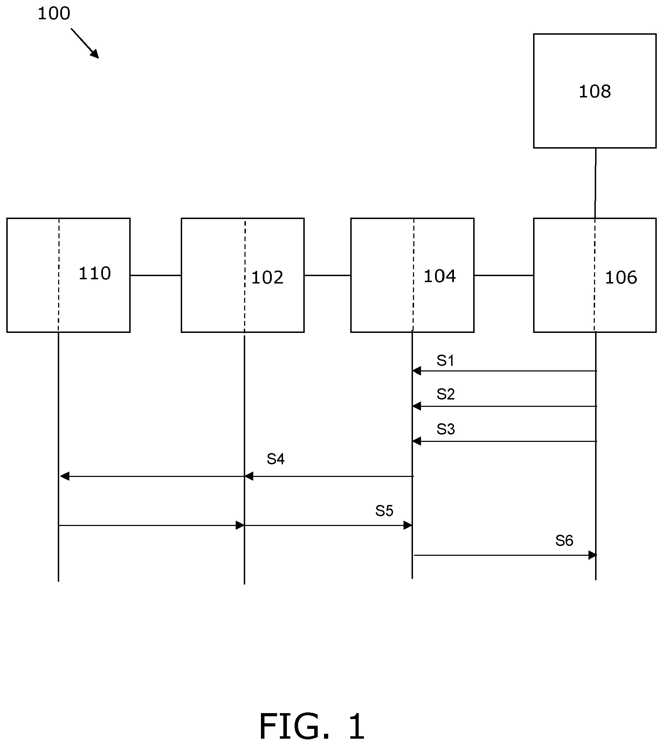

Referring to FIG. 1, illustrated is a timing diagram of an architecture of a system **100** for controlling a building automation system **106,** in accordance with an embodiment of the present disclosure. The system **100** comprises at least one processor (depicted as a processor **104),** an external device **102,** a building automation system **106,** a first interactive user interface **108** of an operator panel and a second interactive user interface **110** of the external device. The at least one processor **104** is communicably coupled to the building automation system **106** and configured to perform several steps (S1, S2, S3, S4, S5, and S6) which are detailed as shown below:
S1 - identify a view of a first interactive user interface **108** of an operator panel that is currently displayed by the building automation system **106,**
S2 - determine, by processing information presented on the first interactive user interface **108** of the operator panel provided by the building automation system **106,** a status of a building for which the building automation system **106** is used,
S3 - determine at least one control operation that is currently available on the first interactive user interface **108** of the operator panel,
S4 - provide the information presented on the first interactive user interface **108** of the operator panel and the at least one control operation to a second interactive user interface **110** of an external device **102** wherein the external device **102** is communicably coupled and remote to the at least one processor **104,** wherein the second interactive user interface **110** presents at least the information presented on the first interactive user interface **108** of the operator panel and provides an interface to select the at least one control operation,
S5 - obtain from the external device **102,** the selection corresponding to the at least one control operation, and determine at least one command to be executed corresponding to the obtained selection corresponding to the at least one control operation, based at least on the status of the building, wherein the at least one command pertains to control of the building automation system **106** and the at least one command is available in at least the first interactive user interface **108** of the operator panel, and
S6 - send to the building automation system **106,** the at least one command for execution by the building automation system **106.**

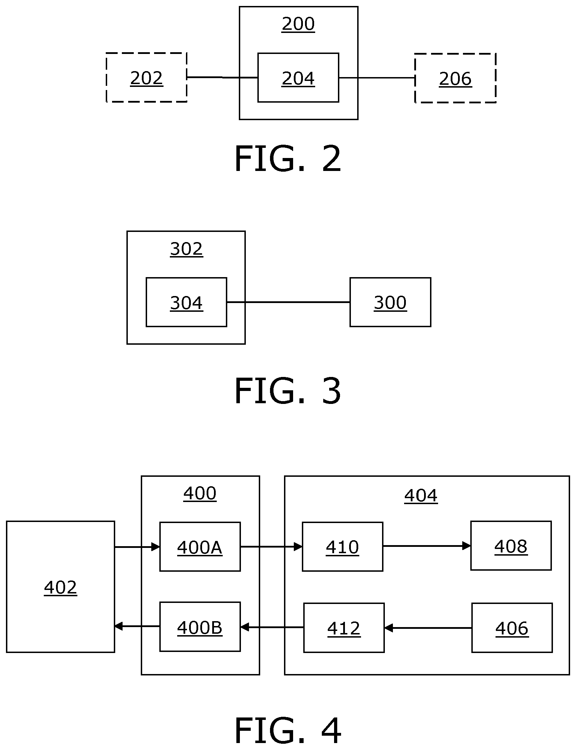

Referring to FIG. 2, illustrated is a block diagram of an architecture of a system **200** for controlling a building automation system **202,** in accordance with an embodiment of the present disclosure. The system **200** comprises at least one processor (depicted as a processor **204)** that is communicably coupled to the building automation system **202.** The at least one processor **204** is also communicably coupled to an external device **206.**

Referring to FIG. 3, illustrated is a coupling arrangement of at least one processor (depicted as a processor **300)** and a building automation system **302,** in accordance with an embodiment of the present disclosure. Herein, the at least one processor **300** is coupled to a terminal port **304** of the building automation system **302.**

Referring to FIG. 4, illustrated is a coupling arrangement of at least one processor (depicted as a processor **400)** and a building automation system **402,** in accordance with another embodiment of the present disclosure. Herein, the processor **400** is arranged on a communication channel between the building automation system **402** and an operator panel **404** of the building automation system **402.** The operator panel **404** comprises an input device **406,** an output device **408,** an encoder **410,** and a decoder **412.** Herein, a capturing software module **400A** is executed by the processor **400** to obtain information presented on the first interactive user interface provided by the building automation system, said information being indicative of a status of a building, when the building automation system **402** sends said information for displaying at the output device **408.** A communicating software module **400B** is executed by the processor **400** to send a command to the building automation system **402.** This command is determined based on the status of the building.

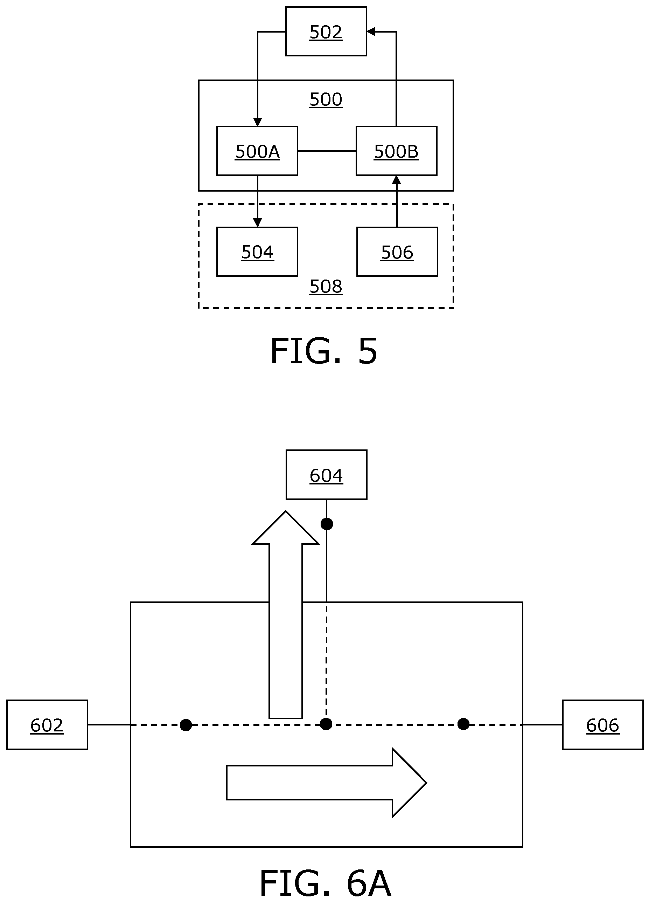

Referring to FIG. 5, illustrated is a coupling arrangement of at least one processor (depicted as a processor **500)** and a building automation system **502,** in accordance with yet another embodiment of the present disclosure. Herein, the at least one processor **500** is shown to be implemented as at least one first processor (depicted as a first processor **500A)** and at least one second processor (depicted as a second processor **500B).** The at least one first processor **500A** is shown to be arranged on a first communication channel between the building automation system **502** and an output device **504** of the building automation system **502.** The at least one second processor **500B** is shown to be arranged on a second communication channel between the building automation system **502** and an input device **506** of the building automation system **502.** The at least one first processor **500A** is configured to obtain information indicative of a status of a building for which the building automation system **502** is used, whereas the at least one second processor **500B** is configured to send, to the building automation system **502,** at least one command pertaining to control of the building automation system **502,** wherein the at least one is determined based on the status of the building. The building automation system **502** further comprises a built-in encoder and decoder (not shown). Input and output device form together an operator panel **(508).**

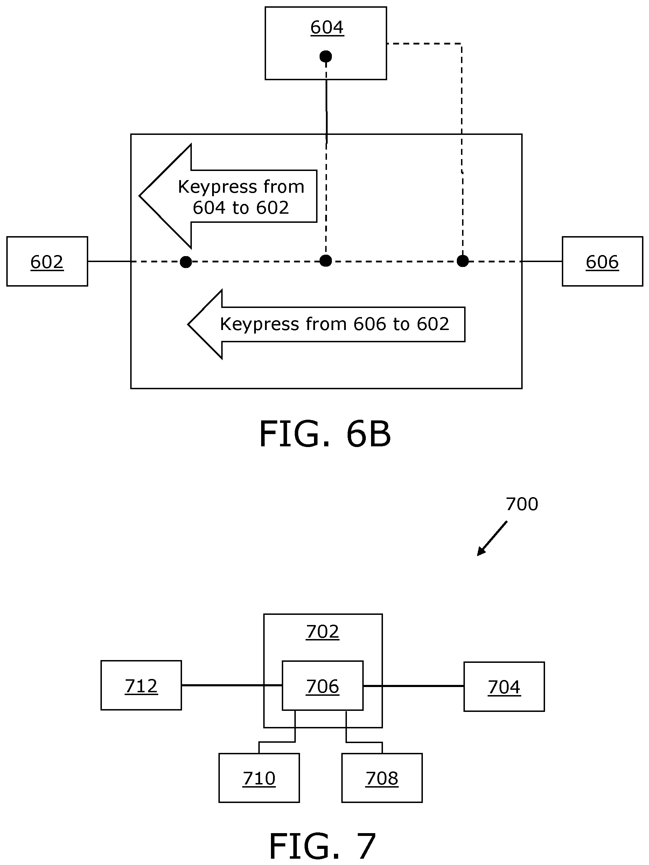

Referring to FIGs. 6A and 6B, FIG. 6A illustrates data flow from a building automation system **602** to at least one processor (depicted as a processor **604)** and an operator panel **606** of the building automation system **602,** while FIG. 6B illustrates data flow from the at least one processor **604** ) and the operator panel **606** of the building automation system **602** to the building automation system **602,** in accordance with an embodiment of the present disclosure.

In FIG. 6A, the at least one processor **604** is shown to be obtaining information presented on a first interactive user interface of the operator panel **606** provided by the building automation system **602,** when such information is being sent from the building automation system **602** to the operator panel **606.** The information presented on the first interactive user interface of the operator panel **606** is indicative of a status of a building, and such information is, for example, in form of text-based data.

In FIG. 6B, a command is being sent to the building automation system **602.** Herein, the command pertains to a control signal associated with a keypress at the operator panel **606.** The command may be sent when a human operator presses a key at the operator panel **606,** or when the at least one processor **604** mimics the pressing of the key at the operator panel **606.**

Referring to FIG. 7, illustrated is an environment **700** where a system **702** for controlling a building automation system **704** is used, in accordance with an embodiment of the present disclosure. The system **702** comprises at least one processor (depicted as a processor **706).** The processor **706** is communicably coupled to the building automation system **704,** an external device **708,** at least one server (depicted as a server **710),** and a maintenance system **712.**

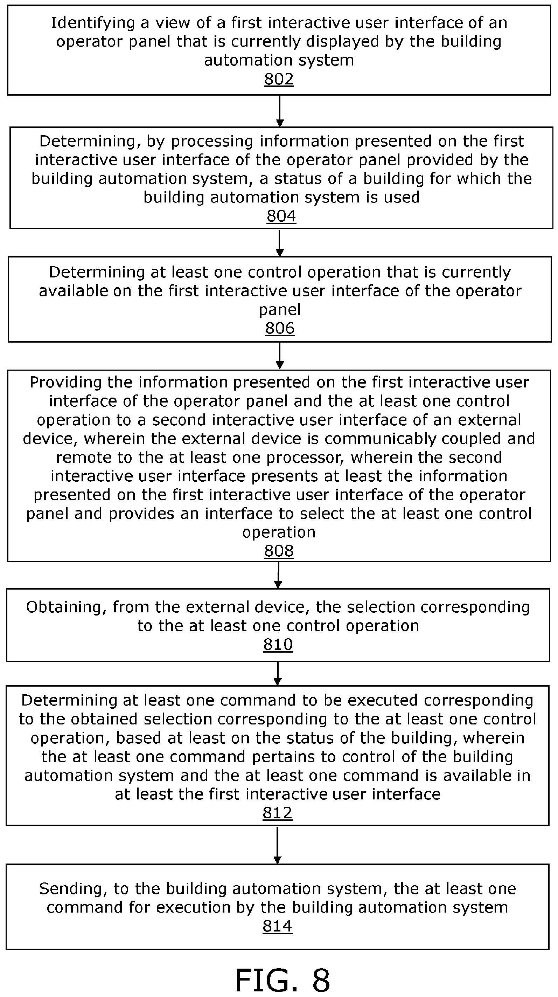

Referring to FIG. 8, illustrated are steps of a method for controlling a building automation system, in accordance with an embodiment of the present disclosure. At step **802,** a view of a first interactive user interface of an operator panel (606) that is currently displayed by the building automation system is identified. At step **804,** a status of a building for which the building automation system is used, is determined by processing information presented on the first interactive user interface of the operator panel provided by the building automation system . At step **806,** at least one control operation that is currently available on the first interactive user interface of the operator panel, is determined. At step **808,** the method comprises providing the information presented on the first interactive user interface of the operator panel and the at least one control operation to a second interactive user interface of an external device, wherein the external device is communicably coupled and remote to the at least one processor, wherein the second interactive user interface presents at least the information presented on the first interactive user interface of the operator panel and provides an interface to select the at least one control operation. At step **810,** the selection corresponding to the at least one control operation is obtained from the external device. At step **812,** at least one command to be executed corresponding to the obtained selection corresponding to the at least one control operation is determined based at least on the status of the building, wherein the at least one command pertains to control of the building automation system and the at least one command is available in at least the first interactive user interface. Furthermore, at step **814,** the method comprises sending, to the building automation system, the at least one command for execution by the building automation system.

The steps **802, 804, 806, 808, 810, 812 and 814** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) for controlling a building automation system (106), the system comprising at least one processor communicably coupled to the building automation system, the at least one processor (104) is configured to:
- identify a view of a first interactive user interface (108) of an operator panel (606) that is currently displayed by the building automation system;
- determine, by processing information presented on the first interactive user interface (108) of the operator panel (606) provided by the building automation system (106), a status of a building for which the building automation system (106) is used;
- determine at least one control operation that is currently available on the first interactive user interface (108) of the operator panel (606);
- provide the information presented on the first interactive user interface (108) of the operator panel (606) and the at least one control operation to a second interactive user interface (110) of an external device (102) wherein the external device (102) is communicably coupled and remote to the at least one processor (104), wherein the second interactive user interface (110) presents at least the information presented on the first interactive user interface (108) of the operator panel and provides an interface to select the at least one control operation;
- obtain, from the external device (102), the selection corresponding to the at least one control operation;
- determine at least one command to be executed corresponding to the obtained selection corresponding to the at least one control operation, based at least on the status of the building, wherein the at least one command pertains to control of the building automation system (106) and the at least one command is available in at least the first interactive user interface (108),
- determine at least one command to be executed further comprising: determine the at least one command further based on predefined rules that specify one or more commands that are to be sent to the building automation system (106) corresponding to one or more statuses of the building and when the status of the building does not correspond to any of the predefined rules. the at least one processor (104) determines the at least one command by interpolating and/or extrapolating at least one predefined rule corresponding to at least one similar status of the building;
and
- send, to the building automation system (106), the at least one command, wherein the building automation system (106) executes the at least one command.

2. A system (100) according to claim 1, wherein the at least one processor (104) is coupled to a terminal port (304) of the building automation system (106).

3. A system (100) according to claim 1, wherein the at least one processor (104) is arranged on a communication channel between the building automation system (106) and an operator panel (606) of the building automation system.

4. A system (100) according to claim 1, wherein the at least one processor (104) is implemented as at least one first processor (500A) and at least one second processor (500B), wherein the at least one first processor is arranged on a first communication channel between the building automation system (106) and an output device (504) of the building automation system, and the at least one second processor is arranged on a second communication channel between the building automation system and an input device (506) of the building automation system.

5. A system (100) according to any of the preceding claims, wherein the at least one processor (104) is further configured to:
- determine whether or not a human operator controls or is to control the building automation system (106); and
- temporarily release control of the building automation system, when it is determined that the human operator controls or is to control the building automation system.

6. A system (100) according to any of the preceding claims, wherein the at least one processor (104) is communicably coupled to at least one server (710), and wherein the at least one processor is further configured to:
- obtain, from the at least one server, information pertaining to at least one of: a building for which the building automation system (106) is used, environmental conditions associated with the building, rules and/or regulations pertaining to a geographical region where the building is located; and
- determine the at least one command to be sent to the building automation system, based on the obtained information.

7. A system (100) according to any of the preceding claims, wherein the at least one processor (104) is communicably coupled to a maintenance system (712), the maintenance system being remote from the building automation system (106), wherein the at least one processor is further configured to:
- receive, from the maintenance system, maintenance information pertaining to at least one maintenance task that is to be performed for the building; and
- determine the at least one command to be sent to the building automation system, based on the maintenance information.

8. A system (100) according to any of the preceding claims, wherein the at least one processor (104) is further configured to perform at least one of:
- identify and record data presented in the view that is currently displayed;
- react to unprompted data presented in the view that is currently displayed;
- navigate to another view which is different from the view that is currently displayed;
- navigate to a default view that is to be displayed by default.

9. A method for controlling a building automation system (106), the method comprises:
- identifying a view of a first interactive user interface of an operator panel (606) that is currently displayed by the building automation system (106);
- determining, by processing information presented on the first interactive user interface (108) of the operator panel provided by the building automation system (106), a status of a building for which the building automation system is used;
- determining at least one control operation that is currently available on the first interactive user interface (108) of the operator panel;
- providing the information presented on the first interactive user interface of the operator panel and the at least one control operation to a second interactive user interface (110) of an external device (102), wherein the external device (102) is communicably coupled and remote to the at least one processor, wherein the second interactive user interface presents at least the information presented on the first interactive user interface of the operator panel and provides an interface to select the at least one control operation;
- obtaining, from the external device (102), the selection corresponding to the at least one control operation;
- determining at least one command to be executed corresponding to the obtained selection corresponding to the at least one control operation, based at least on the status of the building, wherein the at least one command pertains to control of the building automation system (106) and the at least one command is available in at least the first interactive user interface (108),
- determine at least one command to be executed further comprising: determine the at least one command further based on predefined rules that specify one or more commands that are to be sent to the building automation system (106) corresponding to one or more statuses of the building and when the status of the building does not correspond to any of the predefined rules. the at least one processor (104) determines the at least one command by interpolating and/or extrapolating at least one predefined rule corresponding to at least one similar status of the building; and
- sending, to the building automation system (106), the at least one command for execution by the building automation system (106).

10. A method according to claim 9, wherein determining the at least one command to be executed comprises:
- obtaining, from the external device (102), an input corresponding to the at least one command, the at least one command being available in the second interactive user interface; and
- processing the input to determine the at least one command.

11. A method according to claim 9 or 10, further comprising:
- determining whether or not a human operator controls or is to control the building automation system (106); and
- temporarily releasing control of the building automation system, when it is determined that the human operator controls or is to control the building automation system.

12. A method according to claim 9, 10 or 11, further comprising:
- obtaining, from at least one server (710), information pertaining to at least one of: a building for which the building automation system (106) is used, environmental conditions associated with the building, rules and/or regulations pertaining to a geographical region where the building is located; and
- determining the at least one command to be sent to the building automation system, based on the obtained information.

13. A method according to any of claims 9-12, further comprising:
- receiving, from a maintenance system (712), maintenance information pertaining to at least one maintenance task that is to be performed for the building, the maintenance system being remote from the building automation system (106); and
- determining the at least one command to be sent to the building automation system, based on the maintenance information.

14. A method according to any of claims 9-13, further comprising at least one of:
- identifying and recording data presented in the view that is currently displayed;
- reacting to unprompted data presented in the view that is currently displayed;
- navigating to another view which is different from the view that is currently displayed;
- navigating to a default view that is to be displayed by default.

## Patentansprüche

1. System (100) zur Steuerung eines Gebäudeautomationssystems (106), das System mindestens einen Prozessor umfassend, der kommunikativ an das Gebäudeautomationssystem gekoppelt ist, wobei der mindestens eine Prozessor (104) konfiguriert ist zum:
- Identifizieren einer Ansicht einer ersten interaktiven Bedienerschnittstelle (108) eines Bedienfelds (606), die aktuell vom Gebäudeautomationssystem angezeigt wird;
- Bestimmen, durch Verarbeiten von Informationen, die auf der ersten interaktiven Bedienerschnittstelle (108) des vom Gebäudeautomationssystem (106) bereitgestellten Bedienfelds (606) präsentiert werden, eines Zustands eines Gebäudes, für das das Gebäudeautomationssystem (106) verwendet wird;
- Bestimmen mindestens einer Steueroperation, die aktuell auf der ersten interaktiven Bedienerschnittstelle (108) des Bedienfelds (606) verfügbar ist;
- Bereitstellen der Informationen, die auf der ersten interaktiven Bedienerschnittstelle (108) des Bedienfelds (606) präsentiert werden, und der mindestens einen Steueroperation an eine zweite interaktive Bedienerschnittstelle (110) einer externen Vorrichtung (102), wobei die externe Vorrichtung (102) kommunikativ mit dem mindestens einen Prozessor (104) gekoppelt und davon räumlich getrennt ist, wobei die zweite interaktive Bedienerschnittstelle (110) mindestens die Informationen präsentiert, die auf der ersten interaktiven Bedienerschnittstelle (108) des Bedienfelds präsentiert werden, und eine Schnittstelle bereitstellt, um die mindestens eine Steueroperation auszuwählen;
- Erhalten, von der externen Vorrichtung (102), der Auswahl entsprechend der mindestens einen Steueroperation;
- Bestimmen mindestens eines auszuführenden Befehls, der der erhaltenen Auswahl entspricht, die der mindestens einen Steueroperation entspricht, basierend zumindest auf dem Zustand des Gebäudes, wobei der mindestens eine Befehl die Steuerung des Gebäudeautomationssystems (106) betrifft und der mindestens eine Befehl in mindestens der ersten interaktiven Bedienerschnittstelle (108) verfügbar ist,
- Bestimmen mindestens eines auszuführenden Befehls, ferner umfassend: Bestimmen des mindestens einen Befehls ferner basierend auf vorgegebenen Regeln, die einen oder mehrere Befehle spezifizieren, die an das Gebäudeautomationssystem (106) zu senden sind, die einem oder mehreren Zuständen des Gebäudes entsprechen, und wenn der Zustand des Gebäudes keiner der vorgegebenen Regeln entspricht, bestimmt der mindestens eine Prozessor (104) den mindestens einen Befehl durch Interpolieren und/oder Extrapolieren mindestens einer vorgegebenen Regel, die mindestens einem ähnlichen Zustand des Gebäudes entspricht;
und
- Senden des mindestens einen Befehls an das Gebäudeautomationssystem (106), wobei das Gebäudeautomationssystem (106) den mindestens einen Befehl ausführt.

2. System (100) nach Anspruch 1, wobei der mindestens eine Prozessor (104) an einen Anschlussport (304) des Gebäudeautomationssystems (106) gekoppelt ist.

3. System (100) nach Anspruch 1, wobei der mindestens eine Prozessor (104) auf einem Kommunikationskanal zwischen dem Gebäudeautomationssystem (106) und einem Bedienfeld (606) des Gebäudeautomationssystems angeordnet ist.

4. System (100) nach Anspruch 1, wobei der mindestens eine Prozessor (104) als mindestens ein erster Prozessor (500A) und mindestens ein zweiter Prozessor (500B) implementiert ist, wobei der mindestens eine erste Prozessor auf einem ersten Kommunikationskanal zwischen dem Gebäudeautomationssystem (106) und einer Ausgabevorrichtung (504) des Gebäudeautomationssystems angeordnet ist, und der mindestens eine zweite Prozessor auf einem zweiten Kommunikationskanal zwischen dem Gebäudeautomationssystem und einer Eingabevorrichtung (506) des Gebäudeautomationssystems angeordnet ist.

5. System (100) nach einem der vorstehenden Ansprüche, wobei der mindestens eine Prozessor (104) ferner konfiguriert ist zum:
- Bestimmen, ob ein menschlicher Bediener das Gebäudeautomationssystem (106) steuert oder steuern soll; und
- Vorübergehendes Freigeben der Steuerung des Gebäudeautomationssystems, wenn bestimmt wird, dass der menschliche Bediener das Gebäudeautomationssystem steuert oder steuern soll.

6. System (100) nach einem der vorstehenden Ansprüche, wobei der mindestens eine Prozessor (104) kommunikativ an mindestens einen Server (710) gekoppelt ist, und wobei der mindestens eine Prozessor ferner konfiguriert zum:
- Erhalten, von dem mindestens einen Server, von Informationen, die sich auf mindestens eines beziehen von: einem Gebäude, für das das Gebäudeautomationssystem (106) verwendet wird, Umgebungsbedingungen, die mit dem Gebäude assoziiert sind, Regeln und/oder Vorschriften, die sich auf eine geografische Region beziehen, in der sich das Gebäude befindet; und
- Bestimmen des mindestens einen an das Gebäudeautomationssystem zu sendenden Befehls basierend auf den erhaltenen Informationen.

7. System (100) nach einem der vorstehenden Ansprüche, wobei der mindestens eine Prozessor (104) kommunikativ an ein Wartungssystem (712) gekoppelt ist, wobei das Wartungssystem von dem Gebäudeautomationssystem (106) räumlich getrennt ist, wobei der mindestens eine Prozessor ferner konfiguriert ist zum:
- Empfangen, von dem Wartungssystem, von Wartungsinformationen, die sich auf mindestens eine Wartungsaufgabe beziehen, die für das Gebäude auszuführen ist; und
- Bestimmen des mindestens einen an das Gebäudeautomationssystem zu sendenden Befehls basierend auf den Wartungsinformationen.

8. System (100) nach einem der vorstehenden Ansprüche, wobei der mindestens eine Prozessor (104) ferner konfiguriert ist, um mindestens eines auszuführen von:
- Identifizieren und Aufzeichnen von in der aktuell angezeigten Ansicht präsentierten Daten;
- Reagieren auf in der aktuell angezeigten Ansicht präsentierte unaufgeforderte Daten;
- Wechseln zu einer anderen, von der aktuell angezeigten Ansicht unterschiedlichen Ansicht;
- Wechseln zu einer Ansicht, die standardmäßig angezeigt werden soll.

9. Verfahren zur Steuerung eines Gebäudeautomationssystems (106), wobei das Verfahren umfasst:
- Identifizieren einer Ansicht einer ersten interaktiven Bedienerschnittstelle eines Bedienfelds (606), die aktuell vom Gebäudeautomationssystem (106) angezeigt wird;
- Bestimmen, durch Verarbeiten von Informationen, die auf der ersten interaktiven Bedienerschnittstelle (108) des vom Gebäudeautomationssystem (106) bereitgestellten Bedienfelds präsentiert werden, eines Zustands eines Gebäudes, für das das Gebäudeautomationssystem verwendet wird;
- Bestimmen mindestens einer Steueroperation, die aktuell auf der ersten interaktiven Bedienerschnittstelle (108) des Bedienfelds verfügbar ist;
- Bereitstellen der Informationen, die auf der ersten interaktiven Bedienerschnittstelle des Bedienfelds präsentiert werden, und der mindestens einen Steueroperation an eine zweite interaktive Bedienerschnittstelle (110) einer externen Vorrichtung (102), wobei die externe Vorrichtung (102) kommunikativ mit dem mindestens einen Prozessor gekoppelt und davon räumlich getrennt ist, wobei die zweite interaktive Bedienerschnittstelle mindestens die Informationen präsentiert, die auf der ersten interaktiven Bedienerschnittstelle des Bedienfelds präsentiert werden, und eine Schnittstelle bereitstellt, um die mindestens eine Steueroperation auszuwählen;
- Erhalten, von der externen Vorrichtung (102), der Auswahl entsprechend der mindestens einen Steueroperation;
- Bestimmen mindestens eines auszuführenden Befehls, der der erhaltenen Auswahl entspricht, die der mindestens einen Steueroperation entspricht, basierend zumindest auf dem Zustand des Gebäudes, wobei der mindestens eine Befehl die Steuerung des Gebäudeautomationssystems (106) betrifft und der mindestens eine Befehl in mindestens der ersten interaktiven Bedienerschnittstelle (108) verfügbar ist,
- Bestimmen mindestens eines auszuführenden Befehls, ferner umfassend: Bestimmen des mindestens einen Befehls ferner basierend auf vorgegebenen Regeln, die einen oder mehrere Befehle spezifizieren, die an das Gebäudeautomationssystem (106) zu senden sind, die einem oder mehreren Zuständen des Gebäudes entsprechen, und wenn der Zustand des Gebäudes keiner der vorgegebenen Regeln entspricht, bestimmt der mindestens eine Prozessor (104) den mindestens einen Befehl durch Interpolieren und/oder Extrapolieren mindestens einer vorgegebenen Regel, die mindestens einem ähnlichen Zustand des Gebäudes entspricht; und
- Senden des mindestens einen Befehls an das Gebäudeautomationssystem (106) zur Ausführung durch das Gebäudeautomationssystem (106).

10. Verfahren nach Anspruch 9, wobei das Bestimmen des mindestens einen auszuführenden Befehls umfasst:
- Erhalten, von der externen Vorrichtung (102), einer Eingabe, die dem mindestens einen Befehl entspricht, wobei der mindestens eine Befehl in der zweiten interaktiven Bedienerschnittstelle verfügbar ist; und
- Verarbeiten der Eingabe, um den mindestens einen Befehl zu bestimmen.

11. Verfahren nach Anspruch 9 oder 10, ferner umfassend:
- Bestimmen, ob ein menschlicher Bediener das Gebäudeautomationssystem (106) steuert oder steuern soll; und
- Vorübergehendes Freigeben der Steuerung des Gebäudeautomationssystems, wenn bestimmt wird, dass der menschliche Bediener das Gebäudeautomationssystem steuert oder steuern soll.

12. Verfahren nach Anspruch 9, 10 oder 11, ferner umfassend:
- Erhalten, von mindestens einem Server (710), von Informationen, die sich auf mindestens eines beziehen von: einem Gebäude, für das das Gebäudeautomationssystem (106) verwendet wird, Umgebungsbedingungen, die mit dem Gebäude assoziiert sind, Regeln und/oder Vorschriften, die sich auf eine geografische Region beziehen, in der sich das Gebäude befindet; und
- Bestimmen des mindestens einen an das Gebäudeautomationssystem zu sendenden Befehls basierend auf den erhaltenen Informationen.

13. Verfahren nach einem der Ansprüche 9 bis 12, ferner umfassend:
- Empfangen, von einem Wartungssystem (712), von Wartungsinformationen, die sich auf mindestens eine Wartungsaufgabe beziehen, die für das Gebäude auszuführen ist, wobei das Wartungssystem von dem Gebäudeautomationssystem (106) räumlich getrennt ist; und
- Bestimmen des mindestens einen an das Gebäudeautomationssystem zu sendenden Befehls basierend auf den Wartungsinformationen.

14. Verfahren nach einem der Ansprüche 9 bis 13, ferner umfassend mindestens eines des Folgenden:
- Identifizieren und Aufzeichnen von in der aktuell angezeigten Ansicht dargestellten Daten;
- Reagieren auf in der aktuell angezeigten Ansicht präsentierten unaufgeforderten Daten;
- Wechseln zu einer anderen, von der aktuell angezeigten Ansicht unterschiedlichen Ansicht;
- Wechseln zu einer Ansicht, die standardmäßig angezeigt werden soll.

## Revendications

1. Système (100) permettant de commander un système d'automatisation de bâtiment (106), le système comprenant au moins un processeur couplé par communication au système d'automatisation de bâtiment, l'au moins un processeur (104) est configuré pour :
- identifier une vue d'une première interface utilisateur interactive (108) d'un panneau opérateur (606) qui est actuellement affiché par le système d'automatisation de bâtiment ;
- déterminer, en traitant des informations présentées sur la première interface utilisateur interactive (108) du panneau opérateur (606) fourni par le système d'automatisation de bâtiment (106), un statut d'un bâtiment pour lequel le système d'automatisation de bâtiment (106) est utilisé ;
- déterminer au moins une opération de commande qui est actuellement disponible sur la première interface utilisateur interactive (108) du panneau opérateur (606) ;
- fournir les informations présentées sur la première interface utilisateur interactive (108) du panneau opérateur (606) et l'au moins une opération de commande à une seconde interface utilisateur interactive (110) d'un dispositif externe (102) dans lequel le dispositif externe (102) est couplé par communication à, et distant de, l'au moins un processeur (104), dans lequel la seconde interface utilisateur interactive (110) présente au moins les informations présentées sur la première interface utilisateur interactive (108) du panneau opérateur et fournit une interface pour sélectionner l'au moins une opération de commande ;
- obtenir, auprès du dispositif externe (102), la sélection correspondant à l'au moins une opération de commande ;
- déterminer au moins une instruction à exécuter correspondant à la sélection obtenue correspondant à l'au moins une opération de commande, en fonction au moins du statut du bâtiment, dans lequel l'au moins une instruction se rapporte à la commande du système d'automatisation de bâtiment (106) et l'au moins une instruction est disponible au moins dans la première interface utilisateur interactive (108),
- déterminer au moins une instruction à exécuter comprenant en outre : déterminer l'au moins une instruction en fonction en outre de règles prédéfinies qui spécifient une ou plusieurs instructions qui doivent être envoyées au système d'automatisation de bâtiment (106) correspondant à un ou plusieurs statuts du bâtiment et lorsque le statut du bâtiment ne correspond pas à l'une quelconque des règles prédéfinies, l'au moins un processeur (104) détermine l'au moins une instruction par interpolation et/ou extrapolation d'au moins une règle prédéfinie correspondant à au moins un statut similaire du bâtiment ;
et
- envoyer, au système d'automatisation de bâtiment (106), l'au moins une instruction, dans lequel le système d'automatisation de bâtiment (106) exécute l'au moins une instruction.

2. Système (100) selon la revendication 1, dans lequel l'au moins un processeur (104) est couplé à un port terminal (304) du système d'automatisation de bâtiment (106).

3. Système (100) selon la revendication 1, dans lequel l'au moins un processeur (104) est agencé sur un canal de communication entre le système d'automatisation de bâtiment (106) et un panneau opérateur (606) du système d'automatisation de bâtiment.

4. Système (100) selon la revendication 1, dans lequel l'au moins un processeur (104) est implémenté en tant qu'au moins un premier processeur (500A) et au moins un second processeur (500B), dans lequel l'au moins un premier processeur est agencé sur un premier canal de communication entre le système d'automatisation de bâtiment (106) et un dispositif de sortie (504) du système d'automatisation de bâtiment, et l'au moins un second processeur est agencé sur un second canal de communication entre le système d'automatisation de bâtiment et un dispositif d'entrée (506) du système d'automatisation de bâtiment.

5. Système (100) selon l'une quelconque des revendications précédentes, dans lequel l'au moins un processeur (104) est configuré en outre pour :
- déterminer si oui ou non un opérateur humain commande ou doit commander le système d'automatisation de bâtiment (106) ; et
- libérer temporairement la commande du système d'automatisation de bâtiment, lorsqu'il est déterminé que l'opérateur humain commande ou doit commander le système d'automatisation de bâtiment.

6. Système (100) selon l'une quelconque des revendications précédentes, dans lequel l'au moins un processeur (104) est couplé par communication à au moins un serveur (710), et dans lequel l'au moins un processeur est configuré en outre pour :
- obtenir, auprès de l'au moins un serveur, des informations se rapportant à au moins l'un parmi : un bâtiment pour lequel le système d'automatisation de bâtiment (106) est utilisé, des conditions environnementales associées au bâtiment, des règles et/ou réglementations se rapportant à une région géographique où le bâtiment est localisé ; et
- déterminer l'au moins une instruction à envoyer au système d'automatisation de bâtiment, en fonction des informations obtenues.

7. Système (100) selon l'une quelconque des revendications précédentes, dans lequel l'au moins un processeur (104) est couplé par communication à un système de maintenance (712), le système de maintenance étant distant du système d'automatisation de bâtiment (106), dans lequel l'au moins un processeur est configuré en outre pour :
- recevoir, en provenance du système de maintenance, des informations de maintenance se rapportant à au moins une tâche de maintenance qui doit être mise en œuvre pour le bâtiment ; et
- déterminer l'au moins une instruction à envoyer au système d'automatisation de bâtiment, en fonction des informations de maintenance.

8. Système (100) selon l'une quelconque des revendications précédentes, dans lequel l'au moins un processeur (104) est configuré en outre pour mettre en œuvre au moins l'un parmi :
- identifier et enregistrer des données présentées dans la vue qui est actuellement affichée ;
- réagir à des données spontanées présentées dans la vue qui est actuellement affichée ;
- naviguer vers une autre vue qui est différente de la vue qui est actuellement affichée ;
- naviguer vers une vue par défaut qui doit être affichée par défaut.

9. Procédé permettant de commander un système d'automatisation de bâtiment (106), le procédé comprend :
- l'identification d'une vue d'une première interface utilisateur interactive d'un panneau opérateur (606) qui est actuellement affiché par le système d'automatisation de bâtiment (106) ;
- la détermination, en traitant des informations présentées sur la première interface utilisateur interactive (108) du panneau opérateur fourni par le système d'automatisation de bâtiment (106), d'un statut d'un bâtiment pour lequel le système d'automatisation de bâtiment est utilisé ;
- la détermination d'au moins une opération de commande qui est actuellement disponible sur la première interface utilisateur interactive (108) du panneau opérateur ;
- la fourniture des informations présentées sur la première interface utilisateur interactive du panneau opérateur et de l'au moins une opération de commande à une seconde interface utilisateur interactive (110) d'un dispositif externe (102) dans lequel le dispositif externe (102) est couplé par communication à, et distant de, l'au moins un processeur, dans lequel la seconde interface utilisateur interactive présente au moins les informations présentées sur la première interface utilisateur interactive du panneau opérateur et fournit une interface pour sélectionner l'au moins une opération de commande ;
- l'obtention, auprès du dispositif externe (102), de la sélection correspondant à l'au moins une opération de commande ;
- la détermination d'au moins une instruction à exécuter correspondant à la sélection obtenue correspondant à l'au moins une opération de commande, en fonction au moins du statut du bâtiment, dans lequel l'au moins une instruction se rapporte à la commande du système d'automatisation de bâtiment (106) et l'au moins une instruction est disponible au moins dans la première interface utilisateur interactive (108),
- déterminer au moins une instruction à exécuter comprenant en outre : déterminer l'au moins une instruction en fonction en outre de règles prédéfinies qui spécifient une ou plusieurs instructions qui doivent être envoyées au système d'automatisation de bâtiment (106) correspondant à un ou plusieurs statuts du bâtiment et lorsque le statut du bâtiment ne correspond pas à l'une quelconque des règles prédéfinies, l'au moins un processeur (104) détermine l'au moins une instruction par interpolation et/ou extrapolation d'au moins une règle prédéfinie correspondant à au moins un statut similaire du bâtiment ; et
- l'envoi, au système d'automatisation de bâtiment (106), de l'au moins une instruction pour exécution par le système d'automatisation de bâtiment (106).

10. Procédé selon la revendication 9, dans lequel la détermination de l'au moins une instruction à exécuter comprend :
- l'obtention, auprès du dispositif externe (102), d'une entrée correspondant à l'au moins une instruction, l'au moins une instruction étant disponible dans la seconde interface utilisateur interactive ; et
- le traitement de l'entrée pour déterminer l'au moins une instruction.

11. Procédé selon la revendication 9 ou 10, comprenant en outre :
- le fait de déterminer si oui ou non un opérateur humain commande ou doit commander le système d'automatisation de bâtiment (106) ; et
- la libération temporaire de la commande du système d'automatisation de bâtiment, lorsqu'il est déterminé que l'opérateur humain commande ou doit commander le système d'automatisation de bâtiment.

12. Procédé selon la revendication 9, 10 ou 11, comprenant en outre :
- l'obtention, auprès de l'au moins un serveur (710), d'informations se rapportant à au moins l'un parmi : un bâtiment pour lequel le système d'automatisation de bâtiment (106) est utilisé, des conditions environnementales associées au bâtiment, des règles et/ou réglementations se rapportant à une région géographique où le bâtiment est localisé ; et
- la détermination de l'au moins une instruction à envoyer au système d'automatisation de bâtiment, en fonction des informations obtenues.

13. Procédé selon l'une quelconque des revendications 9 à 12, comprenant en outre :
- la réception, en provenance d'un système de maintenance (712), d'informations de maintenance se rapportant à au moins une tâche de maintenance qui doit être mise en œuvre pour le bâtiment, le système de maintenance étant distant du système d'automatisation de bâtiment (106) ; et
- la détermination de l'au moins une instruction à envoyer au système d'automatisation de bâtiment, en fonction des informations de maintenance.

14. Procédé selon l'une quelconque des revendications 9 à 13, comprenant en outre au moins l'un parmi :
- l'identification et l'enregistrement de données présentées dans la vue qui est actuellement affichée ;
- la réaction à des données spontanées présentées dans la vue qui est actuellement affichée ;
- la navigation vers une autre vue qui est différente de la vue qui est actuellement affichée ;
- la navigation vers une vue par défaut qui doit être affichée par défaut.
